# EUROPÄISCHE PATENTANMELDUNG

(11) **EP 3 672 152 A1**
(43) Veröffentlichungstag der Anmeldung: **24.06.2020**
(21) Anmeldenummer: 18214387.5
(22) Anmeldetag: 20.12.2018
(51) Int. Cl.: H04L 12/24, G05B 19/418

(54) **VERFAHREN ZUM BETRIEB EINES KOMMUNIKATIONS- UND/ODER AUTOMATISIERUNGSGERÄTS UND KOMMUNIKATIONS- UND/ODER AUTOMATISIERUNGSGERÄT**

(71) Anmelder: Siemens Aktiengesellschaft, 80333 München (DE)
(72) Erfinder: Kammerlander, Ralph, 76751 Jockgrim (DE)

(57) **Zusammenfassung**

Zum Betrieb eines Kommunikations- bzw. Automatisierungsgeräts werden fortlaufend zur Einrichtung von Hardware-Komponenten (20) des Kommunikations- bzw. Automatisierungsgeräts (200-202, 301-302) verwendete Parameter erfasst und mit einem jeweiligen Verwendungsstatus in einem Parameter-Speicher (21) gespeichert. Zu verwendende Parameter werden entsprechend Vorgaben durch ein Kommunikations- bzw. Automatisierungsnetz-Management-System aus einer Konfigurationsdatenbank (100) übernommen. Bei einem Betriebsstart des Kommunikations- bzw. Automatisierungsgeräts werden aus dem Parameter-Speicher zuletzt verwendete Parameter zur Einrichtung der Hardware-Komponenten geladen und verwendet. Ein Betriebssystemstart des Kommunikations- bzw. Automatisierungsgeräts erfolgt erst nach der Einrichtung der Hardware-Komponenten mittels der aus dem Parameter-Speicher geladenen Parameter.

## Beschreibung

Die vorliegende Erfindung betrifft ein Verfahren zum Betrieb eines Kommunikations- bzw. Automatisierungsgeräts und ein Kommunikations- bzw. Automatisierungsgerät, das insbesondere zur Übermittlung zeitkritischer Daten, wie sie für ein industrielles Automatisierungssystem typisch sind, geeignet ist.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/ Video Bridging) über Kommunikationsnetze ist eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Aus EP 2 327 016 B1 ist ein Verfahren zum Betrieb einer Netzwerkeinheit bekannt, bei dem die Netzwerkeinheit in einer ersten Betriebsart als Netzwerk-Vermittlungsstelle bzw. Router oder in einer zweiten Betriebsart als Netzwerkadapter betrieben werden kann. Dabei wird die Netzwerkeinheit entsprechend einem empfangenen Konfigurationssignal zwischen beiden Betriebsarten umgeschaltet. Bei einem Umschalten in die erste Betriebsart wird ein Urladeprogramm aus einem nichtflüchtigen Direktzugriffspeicher geladen. Das Urladeprogramm lädt wiederum ein Betriebssystem-Abbild des aus einem Flash-Speicher. Außerdem wird eine Netzwerk-Konfigurationsdatei geladen. Ferner werden eine Weiterleitungstabelle sowie andere auf eine Netzwerk-Vermittlungsstelle bzw. einen Router bezogener Datenstrukturen in den Direktzugriffspeicher geschrieben. Darüber hinaus werden entsprechend bei einem Wechsel in die erste Betriebsart externe Anschlüsse der Netzwerkeinheit aktiviert. Außerdem wird ein pseudointerner Anschluss für die Netzwerkeinheit erzeugt, dem eine Medienzugriffssteuerungs-Adresse zugewiesen wird. Die Weiterleitungstabelle wird dementsprechend aktualisiert.

US 2015/0215161 A1 betrifft ein Netzwerkgerät mit einem NFC-Modul (near field communication), das dafür vorgesehen ist, einen NFC-fähigen entfernten Computer zu erkennen und unter Verwendung von NFC ein Konfigurationspaket vom Computer zu empfangen. Dieses Konfigurationspaket umfasst ein Betriebssystemabbild und Netzwerkkonfigurationseinstellungen. Außerdem umfasst das Netzwerkgerät ein Verarbeitungselement, mittels dessen ein Bootstrapping-Prozess unter Verwendung des Betriebssystemabbilds durchgeführt wird. Ferner wird das Netzwerkgerät unter Verwendung der Netzwerkkonfigurationseinstellungen aus dem empfangenen Konfigurationspaket mit einem Netzwerk verbunden.

In US 2016/0094394 A1 ist ein Verfahren beschrieben, bei dem an einem Appliance-Port einer Service-Appliance ein Hinweis empfangen wird, dass ein Port an einem Switch von einem inaktiven Status in einen aktiven Status gewechselt ist. Der Appliance-Port und der Port am Switch sind über ein Netzwerk miteinander verbunden. Außerdem wird ein Bootstrap-Protokoll gestartet, bei dem eine Bootstrap-Nachricht von einem Dienst, der im Switch ausgeführt wird, an der Service-Appliance empfangen wird. Darüber hinaus wird ein leerer Port-Kanal in der Service-Appliance durch die Service-Appliance erstellt. Des Weiteren wird der Appliance-Port durch die Service-Appliance zum Port-Kanal hinzugefügt, und der Dienst wird mit dem Port-Kanal verknüpft.

Komplexe Netzwerkgeräte, wie Managed Switches, benötigen nach einer Abschaltung oder einem Betriebsspannungsausfall zur Wiederherstellung ihrer Netzwerk-Funktionalität erhebliche Zeit, mitunter im Minutenbereich. Bei einer Wiederherstellung der Netzwerk-Funktionalität ist üblicherweise ein Anlauf von Geräte-Betriebssystem und Steuerungsanwendungsprogrammen sowie eine Auswertung von Daten aus einer Konfigurationsdatenbank erforderlich. Dabei wird aus gespeicherten Einstellungen eine Hardware-Parametrierung der jeweiligen Netzwerkgeräts abgeleitet. Während des Anlaufs sind betroffene Netzwerkteilnehmer nicht miteinander verbunden, und es ist keine Netzwerk-Funktionalität gegeben.

Der vorliegenden Erfindung liegt die Aufgabe zugrunde, ein Verfahren zum Betrieb eines Kommunikations- bzw. Automatisierungsgeräts zu schaffen, das eine schelle Wiederinbetriebnahme nach einer geplanten Abschaltung oder einem unerwarteten Ausfall ermöglicht, und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein Kommunikations- bzw. Automatisierungsgerät mit den in Anspruch 10 angegebenen Merkmalen gelöst. Vorteilhafte Weiterbildungen sind in den abhängigen Ansprüchen angegeben.

Entsprechend dem erfindungsgemäßen Verfahren zum Betrieb eines Kommunikations- bzw. Automatisierungsgeräts werden zur Einrichtung von Hardware-Komponenten des Kommunikations- bzw. Automatisierungsgeräts verwendete Parameter fortlaufend erfasst und mit einem jeweiligen Verwendungsstatus in einem Parameter-Speicher gespeichert. Der für die verwendeten Parameter im Parameter-Speicher jeweils gespeicherte Verwendungsstatus kann beispielsweise eine Zeitangabe einer erfolgreichen oder fehlgeschlagenen Parameter-Verwendung umfassen. Zu verwendende Parameter werden entsprechend Vorgaben durch ein Kommunikations- bzw. Automatisierungsnetz-Management-System aus einer Konfigurationsdatenbank übernommen.

Das Kommunikations- bzw. Automatisierungsgerät umfasst vorzugsweise Router- bzw. Switch-Funktionen und stellt Ressourcen zur Übermittlung von Datagrammen, insbesondere Datenpakete bzw. Datenrahmen, bereit. Die bereitgestellten Ressourcen können beispielsweise nutzbare Übertragungszeitfenster, Bandbreite, zugesicherte maximale Latenz, Queue-Anzahl, Queue-Cache bzw. Adress-Cache umfassen.

Erfindungsgemäß werden bei einem Betriebsstart des Kommunikations- bzw. Automatisierungsgeräts aus dem Parameter-Speicher zuletzt verwendete Parameter, insbesondere entsprechend einem "last known good state", zur Einrichtung der Hardware-Komponenten geladen und verwendet. Ein Betriebssystemstart des Kommunikations- bzw. Automatisierungsgeräts erfolgt erst nach der Einrichtung der Hardware-Komponenten mittels der aus dem Parameter-Speicher geladenen Parameter. Durch Protokollierung von während eines ungestörten Gerätebetriebs verwendeter Hardwareparametrierung in einem nichtflüchtigen Speicher kann eine deutlich schnellere Wiederherstellung von Netzwerk-Funktionalität realisiert werden, und zwar bereits vor Betriebssystemstart.

Entsprechend einer bevorzugten Ausgestaltung der vorliegenden Erfindung wird nach Abschluss des Betriebssystemstarts zumindest ein Steuerungsanwendungsprogramm ausgeführt, mittels dessen entsprechend den Vorgaben durch das Kommunikations- bzw. Automatisierungsnetz-Management-System aus der Konfigurationsdatenbank zur Einrichtung der Hardware-Komponenten des Kommunikations- bzw. Automatisierungsgeräts zu verwendende Parameter übernommen werden. Damit kann ein Parameterabgleich hinsichtlich der Vorgaben durch das Kommunikations- bzw. Automatisierungsnetz-Management-System während eine weniger zeitkritischen Phase erfolgen.

Ein Aufbau von Kommunikationsverbindungen bzw. -beziehungen zu anderen Kommunikations- bzw. Automatisierungsgeräten erfolgt vorteilhafterweise erst nach der Einrichtung der Hardware-Komponenten mittels der aus dem Parameter-Speicher geladenen Parameter. Vorzugsweise erfolgt der Aufbau von Kommunikationsverbindungen bzw. -beziehungen zu anderen Kommunikations- bzw. Automatisierungsgeräten erst nach Abschluss des Betriebssystemstarts.

Entsprechend einer weiteren vorteilhaften Ausgestaltung der vorliegenden Erfindung erfolgt der Betriebssystemstart bei fehlenden zuletzt verwendeten Parametern zur Einrichtung der Hardware-Komponenten bzw. bei nicht verfügbarem Parameter-Speicher auf Grundlage allgemeiner Vorgabewerte für die Parameter. Diese allgemeinen Vorgabewerte werden insbesondere bis zu einem Vorliegen von Ausführungsergebnissen eines Steuerungsanwendungsprogramms verwendet, mittels dessen entsprechend den Vorgaben durch das Kommunikations- bzw. Automatisierungsnetz-Management-System aus der Konfigurationsdatenbank zur Einrichtung der Hardware-Komponenten des Kommunikations- bzw. Automatisierungsgeräts zu verwendende Parameter übernommen werden.

Das erfindungsgemäße Kommunikations- bzw. Automatisierungsgerät ist zur Durchführung eines Verfahrens entsprechend vorangehenden Ausführungen vorgesehen sowie dafür ausgestaltet und eingerichtet, fortlaufend zur Einrichtung von Hardware-Komponenten des Kommunikations- bzw. Automatisierungsgeräts verwendete Parameter zu erfassen und mit einem jeweiligen Verwendungsstatus in einem Parameter-Speicher zu speichern. Außerdem ist das Kommunikations- bzw. Automatisierungsgerät dafür ausgestaltet und eingerichtet, zu verwendende Parameter entsprechend Vorgaben durch ein Kommunikations- bzw. Automatisierungsnetz-Management-System aus einer Konfigurationsdatenbank zu übernehmen. Darüber hinaus ist das Kommunikations- bzw. Automatisierungsgerät dafür ausgestaltet und eingerichtet, bei einem Betriebsstart aus dem Parameter-Speicher zuletzt verwendete Parameter zur Einrichtung der Hardware-Komponenten zu laden und zu verwenden und einen Betriebssystemstart erst nach der Einrichtung der Hardware-Komponenten mittels der aus dem Parameter-Speicher geladenen Parameter auszulösen.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationsnetz für ein industrielles Automatisierungssystem,
- Figur 2: eine Gegenüberstellung jeweils eines Verfahrensablaufs für konventionellen Betriebsstart eines Kommunikationsgeräts und für einen beschleunigten Betriebsstart,
- Figur 3: eine zeitliche Gegenüberstellung der in Figur 2 dargestellten Verfahrensabläufe.

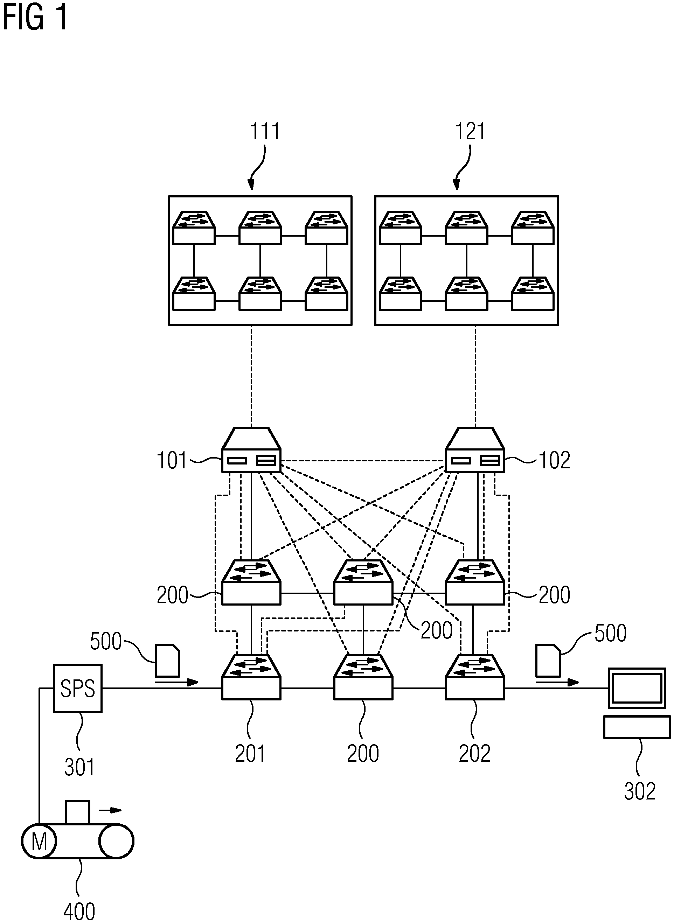

Das in Figur 1 dargestellte Kommunikationsnetz für ein industrielles Automatisierungssystem umfasst mehrere Kommunikationsgeräte 200-202 und übergeordnete Steuerungseinheiten 101, 102. Die Kommunikationsgeräte 200-202 können beispielsweise Bridges, Switches oder Router sein und zum Anschluss von speicherprogrammierbaren Steuerungen 301, Eingabe/Ausgabe-Einheiten (I/O-Module) oder Bedien- und Beobachtungsstationen 302 des industriellen Automatisierungssystems dienen. Im vorliegenden Ausführungsbeispiel ist das die Kommunikationsgeräte 200-202 umfassende Kommunikationsnetz als Time-sensitive Network, insbesondere entsprechend IEEE 802.1Q und IEEE 802.1 Qbv, ausgestaltet.

Speicherprogrammierbare Steuerungen 301 umfassen typischerweise jeweils ein Kommunikationsmodul, eine Zentraleinheit sowie zumindest eine Eingabe/Ausgabe-Einheit dar. Eingabe/ Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul ist eine speicherprogrammierbare Steuerung 301 beispielsweise mit einem Switch oder Router oder zusätzlich mit einem Feldbus verbunden. Die Eingabe/AusgabeEinheit dient einem Austausch von Steuerungs- und Messgrößen zwischen der speicherprogrammierbaren Steuerung 301 und einer durch die speicherprogrammierbare Steuerung 301 gesteuerten Maschine oder Vorrichtung 400. Die Zentraleinheit ist insbesondere für eine Ermittlung geeigneter Steuerungsgrößen aus erfassten Messgrößen vorgesehen. Obige Komponenten der speicherprogrammierbaren Steuerung 301 sind im vorliegenden Ausführungsbeispiel über ein Rückwandbus-System miteinander verbunden.

Eine Bedien- und Beobachtungsstation 302 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 302 zur Anzeige von Werten eines Regelungskreises und zur Veränderung von Regelungsparametern verwendet. Bedien- und Beobachtungsstationen 302 umfassen zumindest eine graphische Benutzerschnittstelle, ein Eingabegerät, eine Prozessoreinheit und ein Kommunikationsmodul.

Kommunikationsgeräte bzw. Automatisierungsgeräte mit Kommunikationsmodulen weisen im vorliegenden Ausführungsbeispiel insbesondere Router- bzw. Switch-Funktionen auf und stellen Ressourcen zur Übermittlung von Datenpaketen bzw. Datenrahmen bereit. Die bereitgestellten Ressourcen umfassen beispielsweise nutzbare Übertragungszeitfenster, Bandbreite, zugesicherte maximale Latenz, Queue-Anzahl, Queue-Cache bzw. Adress-Cache.

Den Kommunikationsgeräten 200-202 ist im vorliegenden Ausführungsbeispiel eine übergeordnete optionale Steuerungsrichtung zugeordnet, die eine Haupt-Steuerungseinheit 101 und eine Reserve-Steuerungseinheit 102 umfasst. Die Haupt-Steuerungseinheit 101 und die Reserve-Steuerungseinheit 102 sind zueinander redundant. Insbesondere übernimmt die Haupt-Steuerungseinheit 101 dabei eine Master-Rolle, während der Reserve-Steuerungseinheit 102 eine Slave-Rolle zugewiesen ist. Die Steuerungseinheiten 101, 102 authentisieren sich vorzugsweise gegenüber den zugeordneten Kommunikationsgeräten 200-202 und erhalten nach erfolgreicher Authentifizierung Steuerungszugriff auf die zugeordneten Kommunikationsgeräte 200-202. Für jede Steuerungseinheit 101, 101 ist jeweils eine separate Ressourcensicht 111, 121 auf die Kommunikationsgeräten 200-202 vorgesehen.

Mittels erster Automatisierungsgeräte, die an Quell-Netzknoten angeschlossene Kommunikationsendgeräte darstellen und eine Talker-Funktion haben, werden Informationen bzw. Dienste über Multicast-Datenströme zur Nutzung an zweiten Automatisierungsgeräten bereitgestellt, die an Ziel-Netzknoten angeschlossene Kommunikationsendgeräte darstellen und eine Listener-Funktion haben. Einem Automatisierungsgerät kann gleichzeitig sowohl eine Talker-Funktion als auch eine Listener-Funktion haben, beispielsweise wenn es einerseits Automatisierungsdienste bereitstellt und andererseits Automatisierungsdienste anderer Geräte nutzt.

Im vorliegenden Ausführungsbeispiel hat die speicherprogrammierbare Steuerung 301 eine Talker-Funktion, während die Bedien- und Beobachtungsstation 302 eine Listener-Funktion aufweist und insbesondere durch die speicherprogrammierbare Steuerung 301 bereitgestellte Informationen empfängt. Grundsätzlich könnte die Bedien- und Beobachtungsstation 302 von der speicherprogrammierbaren Steuerung 301 empfangene Informationen analysieren und hieraus Steuerungsparameter für die speicherprogrammierbare Steuerung 301 vorgeben. Somit würden sowohl die speicherprogrammierbare Steuerung 301 als auch die Bedien- und Beobachtungsstation beide Funktionen wahrnehmen. Im Sinn einer vereinfachten Darstellung wird nachfolgend davon ausgegangen, dass beide Geräte jeweils nur eine zugeordnete Funktion aufweisen.

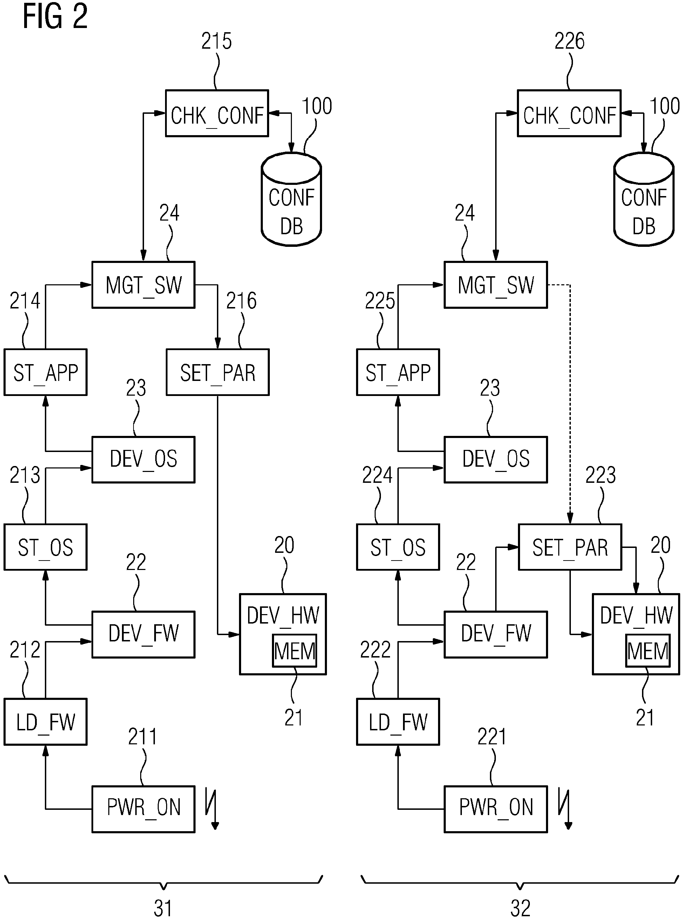

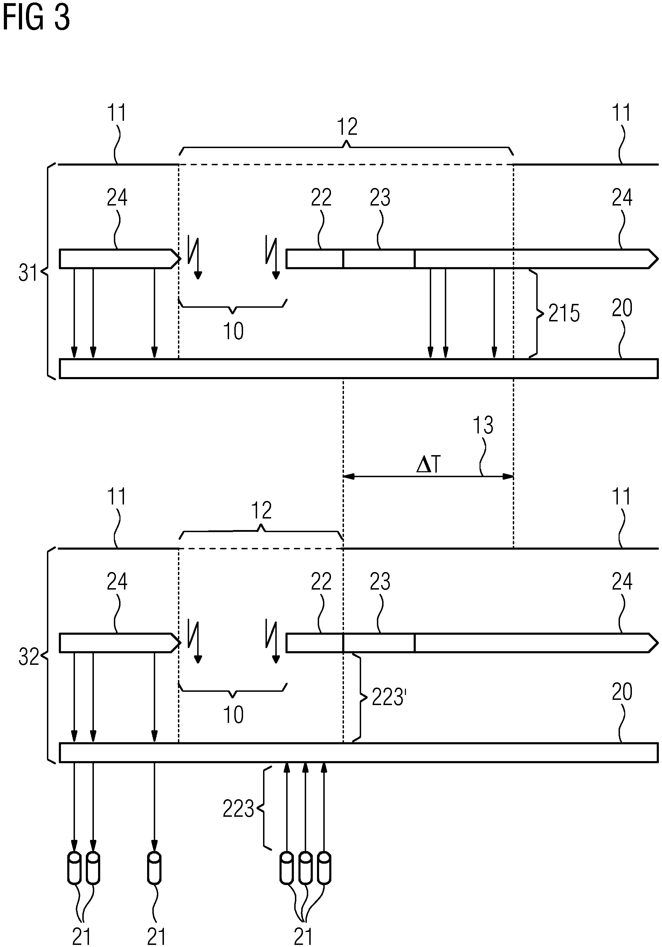

Entsprechend dem in den Figuren 2 und 3 schematisch bzw. zeitlich dargestellten Verfahrensablauf 31 für einen konventionellen Betriebsstart eines Kommunikationsgeräts erfolgt nach einem Gerätestart (Schritt 211) und Laden von Geräte-Firmware 22 (Schritt 212) ein Start seines Betriebssystems 23 (Schritt 213). Nach Abschluss des Starts des Betriebssystems 23 wird entsprechend Schritt 214 ein Steuerungsanwendungsprogramm 24 gestartet. Bei Ausführung des Steuerungsanwendungsprogramms 24 werden Vorgaben eines Engineering- bzw. Kommunikationsnetz-Management-Systems ausgewertet und in Abhängigkeit davon aus einer Konfigurationsdatenbank 100, die dem Engineering- bzw. Kommunikationsnetz-Management-System zugeordnet ist, zur Einrichtung von Hardware-Komponenten 20 des Kommunikationsgeräts zu verwendende Parameter übernommen (Schritt 215). Mit diesen Parametern erfolgt in Schritt 216 eine Einrichtung der Hardware-Komponenten 20 des Kommunikationsgeräts. Entsprechend Figur 3 ergibt sich mit dem Verfahrensablauf 31 für einen konventionellen Betriebsstart beispielsweise bei einer Versorgungsspannungsunterbrechung 10 eine relativ lange Zeitdauer 12 nicht verfügbarer Gerätefunktionalität bevor eine vollständige Gerätefunktionalität 11 wiederhergestellt ist.

Im Gegensatz zum Verfahrensablauf 31 für einen konventionellen Betriebsstart werden beim Verfahrensablauf 32 für einen beschleunigten Betriebsstart direkt nach dem Gerätestart (Schritt 221) und Laden der Geräte-Firmware 22 (Schritt 222) aus einem Parameter-Speicher 21 zuletzt verwendete Parameter zur Einrichtung der Hardware-Komponenten 20 geladen und verwendet (Schritt 223). Als Voraussetzung hierfür werden entsprechend Schritt 223' (Figur 3) fortlaufend zur Einrichtung der Hardware-Komponenten 20 des Kommunikationsgeräts verwendete Parameter erfasst und mit einem jeweiligen Verwendungsstatus im Parameter-Speicher 21 gespeichert. Auf diese Weise werden die zuletzt verwendeten Parameter erfasst. Vorzugsweise umfasst der für die verwendeten Parameter im Parameter-Speicher 21 jeweils gespeicherte Verwendungsstatus eine Zeitangabe einer erfolgreichen oder fehlgeschlagenen Parameter-Verwendung.

Entsprechend dem Verfahrensablauf 32 für einen beschleunigten Betriebsstart erfolgt ein Start des Betriebssystems 23 (Schritt 224) erst nach der Einrichtung der Hardware-Komponenten 20 mittels der aus dem Parameter-Speicher 21 geladenen Parameter. Ein Aufbau von Kommunikationsverbindungen bzw. -beziehungen zu anderen Kommunikations- bzw. Automatisierungsgeräten erfolgt erst nach der Einrichtung der Hardware-Komponenten 20 mittels der aus dem Parameter-Speicher 21 geladenen Parameter, insbesondere nach Abschluss des Starts des Betriebssystems 23.

Nach Abschluss des Starts des Betriebssystems 23 wird entsprechend Schritt 225 zumindest ein Steuerungsanwendungsprogramm 24 gestartet, mittels dessen Vorgaben des Engineering- bzw. Kommunikationsnetz-Management-Systems ausgewertet und entsprechend diesen Vorgaben zu verwendende Parameter aus der Konfigurationsdatenbank 100 zur Einrichtung der Hardware-Komponenten 20 übernommen werden (Schritt 226). Mit diesen Parametern kann in Schritt 223 eine Anpassung der Einrichtung der Hardware-Komponenten 20 erfolgen. Bei fehlenden zuletzt verwendeten Parametern zur Einrichtung der Hardware-Komponenten 20 bzw. bei nicht verfügbarem Parameter-Speicher 21 erfolgt der Start des Betriebssystems 23 auf Grundlage allgemeiner Vorgabewerte für die Parameter. Diese allgemeinen Vorgabewerte werden dann bis zu einem Vorliegen von Ausführungsergebnissen des Steuerungsanwendungsprogramms 24 verwendet.

Obige Ausführungen gelten für Betriebsstart von Automatisierungsgeräten mit Kommunikationsmodulen analog.

## Patentansprüche

1. Verfahren zum Betrieb eines Kommunikations- und/oder Automatisierungsgeräts, bei dem
- fortlaufend zur Einrichtung von Hardware-Komponenten (20) des Kommunikations- und/oder Automatisierungsgeräts (200-202, 301-302) verwendete Parameter erfasst und mit einem jeweiligen Verwendungsstatus in einem Parameter-Speicher (21) gespeichert werden,
- zu verwendende Parameter entsprechend Vorgaben durch ein Kommunikations- und/oder Automatisierungsnetz-Management-System aus einer Konfigurationsdatenbank (100) übernommen werden,
- bei einem Betriebsstart des Kommunikations- und/oder Automatisierungsgeräts aus dem Parameter-Speicher zuletzt verwendete Parameter zur Einrichtung der Hardware-Komponenten geladen und verwendet werden,
- ein Betriebssystemstart des Kommunikations- und/oder Automatisierungsgeräts erst nach der Einrichtung der Hardware-Komponenten mittels der aus dem Parameter-Speicher geladenen Parameter erfolgt.

2. Verfahren nach Anspruch 1,
bei dem nach Abschluss des Betriebssystemstarts zumindest ein Steuerungsanwendungsprogramm ausgeführt wird, mittels dessen entsprechend den Vorgaben durch das Kommunikations- und/oder Automatisierungsnetz-Management-System aus der Konfigurationsdatenbank zur Einrichtung der Hardware-Komponenten des Kommunikations- und/oder Automatisierungsgeräts zu verwendende Parameter übernommen werden.

3. Verfahren nach einem der Ansprüche 1 oder 2,
bei dem ein Aufbau von Kommunikationsverbindungen und/oder -beziehungen zu anderen Kommunikations- und/oder Automatisierungsgeräten erst nach der Einrichtung der Hardware-Komponenten mittels der aus dem Parameter-Speicher geladenen Parameter erfolgt.

4. Verfahren nach Anspruch 3,
bei dem der Aufbau von Kommunikationsverbindungen und/oder -beziehungen zu anderen Kommunikations- und/oder Automatisierungsgeräten erst nach Abschluss des Betriebssystemstarts erfolgt.

5. Verfahren nach einem der Ansprüche 1 bis 4,
bei dem der Betriebssystemstart bei fehlenden zuletzt verwendeten Parametern zur Einrichtung der Hardware-Komponenten und/oder nicht verfügbarem Parameter-Speicher auf Grundlage allgemeiner Vorgabewerte für die Parameter erfolgt.

6. Verfahren nach Anspruch 5,
bei dem die allgemeinen Vorgabewerte bis zu einem Vorliegen von Ausführungsergebnissen eines Steuerungsanwendungsprogramms verwendet werden, mittels dessen entsprechend den Vorgaben durch das Kommunikations- und/oder Automatisierungsnetz-Management-System aus der Konfigurationsdatenbank zur Einrichtung der Hardware-Komponenten des Kommunikations- und/oder Automatisierungsgeräts zu verwendende Parameter übernommen werden.

7. Verfahren nach einem der Ansprüche 1 bis 6,
bei dem der für die verwendeten Parameter im Parameter-Speicher jeweils gespeicherte Verwendungsstatus eine Zeitangabe einer erfolgreichen oder fehlgeschlagenen Parameter-Verwendung umfasst.

8. Verfahren nach einem der Ansprüche 1 bis 7,
bei dem das Kommunikations- und/oder Automatisierungsgerät Router- und/oder Switch-Funktionen umfasst und Ressourcen zur Übermittlung von Datagrammen bereitstellt.

9. Verfahren nach Anspruch 8,
bei dem die bereitgestellten Ressourcen nutzbare Übertragungszeitfenster, Bandbreite, zugesicherte maximale Latenz, Queue-Anzahl, Queue-Cache und/oder Adress-Cache umfassen.

10. Kommunikations- und/oder Automatisierungsgerät zur Durchführung eines Verfahrens nach einem der Ansprüche 1 bis 9, wobei das Kommunikations- und/oder Automatisierungsgerät dafür ausgestaltet und eingerichtet ist,
- fortlaufend zur Einrichtung von Hardware-Komponenten des Kommunikations- und/oder Automatisierungsgeräts verwendete Parameter zu erfassen und mit einem jeweiligen Verwendungsstatus in einem Parameter-Speicher zu speichern,
- zu verwendende Parameter entsprechend Vorgaben durch ein Kommunikations- und/oder Automatisierungsnetz-Management-System aus einer Konfigurationsdatenbank zu übernehmen,
- bei einem Betriebsstart aus dem Parameter-Speicher zuletzt verwendete Parameter zur Einrichtung der Hardware-Komponenten zu laden und zu verwenden,
- einen Betriebssystemstart erst nach der Einrichtung der Hardware-Komponenten mittels der aus dem Parameter-Speicher geladenen Parameter auszulösen.
